# EUROPEAN PATENT APPLICATION

(11) **EP 1 749 610 A1**
(43) Date of publication of application: **07.02.2007**
(21) Application number: 06254001.8
(22) Date of filing: 31.07.2006
(51) Int. Cl.: B23H 7/38

(54) **Electroerosion system for the production of a cavity or a shaped hole in an element**

(30) Priority: 02.08.2005 IT MI20051518
(71) Applicant: Nuovo Pignone S.P.A., 50127 Florence (IT)
(72) Inventor: Cantelli, Ugo, 00152 Roma (IT); Ballerini, Giovanni, 50100 Impruneta Firenze (IT)
(74) Representative: Pedder, James Cuthbert

(57) **Abstract**

Electroerosion system (10) for the production of a cavity (22) or a shaped hole in an element (20) to be processed, the system (10) comprises a tank (12) containing a dielectric fluid (14) and an electrode (16) connected to an electric power supply system (18) to supply a high voltage to the electrode (16) and to produce a series of electric discharges on the element (20) which is immersed together with the electrode (16) in the dielectric fluid (14), in order to obtain a surface erosion thereof, forming the cavity (22), the system (10) comprises ultrasonic vibration means (30) capable of transmitting a series of ultrasonic waves at a varying frequency to the dielectric fluid (14).

## Description

The present invention relates to an electroerosion system in particular for the production of a cavity or shaped hold in a metallic element.

An electroerosion system generally comprises a tank containing a dielectric fluid in which an element is immersed, in which a cavity or shaped hole with very strict characteristics or dimensional tolerances, is to be obtained.

Said electroerosion system also comprises an electrode and an electric generator electrically connected to the same, which is positioned close to the element to be processed, and is therefore at least partially immersed in said dielectric fluid.

Said electric generator is capable of applying a voltage to said electrode producing an electric current which, through said dielectric fluid, is discharged onto said element causing a localized erosion of a portion of the metallic element close to the electrode itself.

This is due in particular to the extremely high temperatures which are produced at a local level on the surface portions of the metallic element in particular close to the electrode.

The eroded material consequently becomes detached from the surface of the element remaining in suspension in the dielectric fluid.

A cavity or shaped hole having certain characteristics is obtained over a period of time by means of a series of discharges and relative shifting of the electrode with respect to the element.

A first drawback lies in the fact that during the electroerosion, the particles of eroded material jeopardize the quality and efficacy of the electric discharges of the electroerosion system.

The reason for this is that said particles stagnate in the dielectric fluid remaining close to the surface of the element.

Another drawback of the known electroerosion systems is that with time a high concentration of eroded particles is formed jeopardizing the electroerosion process and consequently the surface finishing of the cavity or shaped hole.

A further drawback is that during the electroerosion, the material which is detached from the element to be processed remains close to the surface creating a layer of molten material on its surface.

The present invention seeks to provide an electroerosion system for producing a cavity or shaped hole in an element to be processed which allows an easy and rapid evacuation of the waste fragments during the electroerosion itself and of the exhausted dielectric fluid.

The present invention also seeks to provide an electroerosion system for producing a cavity or shaped hole which allows a time reduction for producing the cavity itself.

The present invention further seeks to provide an electroerosion system for producing a cavity or shaped hole in an element to be processed which allows a high surface quality to be obtained, maintaining reduced processing times.

The present invention additionally seeks to provide an electroerosion system for producing a cavity or shaped hole in an element to be processed which is simple and economical.

According to the invention, there is provided an electroerosion system for the production of a cavity or a shaped hole in an element to be processed, said system comprising a tank containing a dielectric fluid and an electrode connected to an electric power supply system to supply a high voltage to said electrode and to produce a series of electric discharges on said element which is immersed together with said electrode in said dielectric fluid, in order to obtain a surface erosion thereof, forming said cavity or shaped hole, characterized in that it comprises ultrasonic vibration means capable of transmitting a series of ultrasonic waves at a varying frequency to said dielectric fluid.

The system may comprises an electrode-holder which supports said electrode and in that it comprises an electric generator.

The electric generator may be connected to the electrode-holder or may be integrated with said electrode-holder (17).

The ultrasonic vibration means may comprise a series of transmitters each of which is in contact with said dielectric fluid.

Each transmitter may be a bar in particular having a "C"-shaped section.

The ultrasonic vibration means may comprise at least one ultrasound generator connected to said series of transmitters.

The varying frequency may have an average value ranging from 35 to 45 KHz or may have an average value of about 40 KHz.

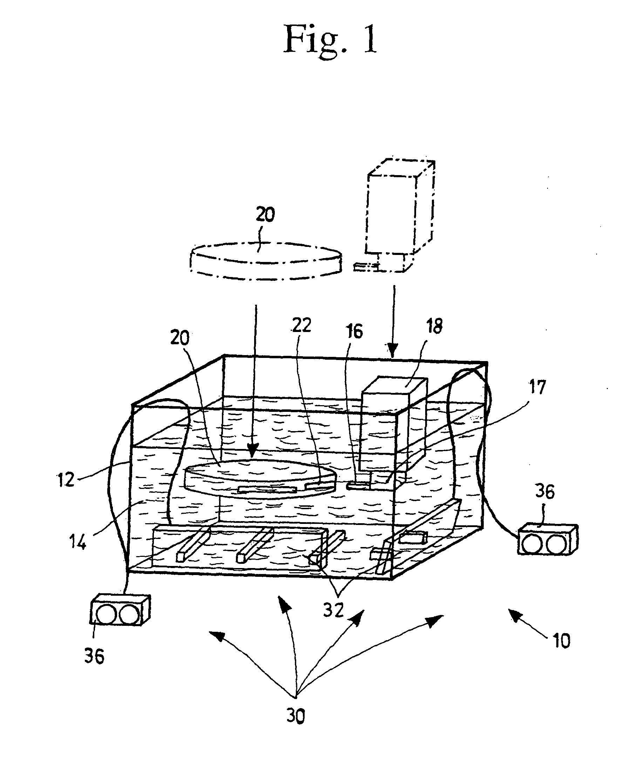

The invention will now be described in greater detail, by way of example, with reference to the drawings, the single figure of which is a schematic perspective view which shows a preferred embodiment of an electroerosion system for producing a cavity or shaped hole in an element to be processed according to the present invention.

With reference to this figure, this shows an electroerosion system 10 for the production of a cavity 22 or shaped hole in an element 20 to be processed.

Said electroerosion system 10 comprises a tank 12 containing a dielectric fluid 14 and an electrode 16 connected to an electric power supply system 18 for providing said electrode 16 with a high voltage and for creating a series of electric discharges on said metallic element 20 which is immersed, together with said electrode 16 in said dielectric fluid 14.

This allows a surface erosion of the same to be obtained in order to produce said cavity 22 or shaped hole.

Said system 10 comprises ultrasonic vibration means 30 in particular applied to the dielectric fluid 14, i.e. capable of transmitting a series of ultrasonic waves at a varying frequency to said dielectric fluid 14.

This allows an easy and rapid removal of the metallic waste fragments and an exhausted part of the dielectric fluid 14 following the electroerosion processing.

This also causes a reduction in the micro-fractures induced in the element 20 to be processed and also causes an increase in the fatigue resistance of the processed element 20 itself.

Said electroerosion system 10 is particularly effective in the production of deep electroeroded cavities 22 as it necessarily avoids the possibility of a forced flow of dielectric fluid 14 of deforming the electrode 16 causing a contact with a consequent short circuit with the element 20 to be processed.

It also prevents the danger of short circuits caused by a possible contact due to the vibration of the element 20 to be processed or of the electrode 16.

Furthermore, the ultrasonic vibration means 30 applied to the dielectric fluid 14 cause a reduction in the quantity of eroded or molten metallic waste fragments on the surface of the cavity 22 of the element 20 to be processed.

The particular reason for this is that said ultrasonic vibration means 30 send said metallic waste fragments and the exhausted dielectric fluid outside said cavity 22 also allowing the entry of fresh dielectric fluid 14 into the same.

Said system 10 preferably comprises an electrode-holder 17, which supports said electrode 16, and also comprises an electric generator 18 in particular connected or integrated with said electrode-holder 17.

Said ultrasonic vibrations means 30 preferably comprise a series of transmitters 32 each of which is preferably a bar in particular having a "C"-shaped section, and each of the transmitters 32, moreover, is in contact with said dielectric fluid 14.

In particular, said series of transmitters 32 is immersed in said tank 12 in which said dielectric fluid 14 is contained.

Said ultrasonic vibration means 30 preferably comprise at least one ultrasound generator 36 connected to said series of transmitters 32.

Said ultrasonic vibration means 30 are preferably capable of transmitting to said dielectric fluid 14 a series of ultrasonic waves at a varying frequency by means of said series of transmitters 16.

Said varying frequency has an average value preferably ranging from 35 to 45 KHz, and even more preferably said varying frequency has an average value of approximately 40 KHz.

Furthermore, by allowing said dielectric fluid to vibrate by means of said ultrasonic waves, the distance between said electrode 16 and said element 20 remains advantageously unvaried.

An electroerosion system for producing a cavity or shaped hole in an element to be processed according to the present invention advantageously allows reduced processing times in both the rough-shaping and finishing phase with a consequent increase in the productivity and also a better quality of the finished surface with the same processing parameters.

It can therefore be seen that an electroerosion system for producing a cavity or shaped hole in an element to be processed according to the present invention achieves the objectives indicated above.

The electroerosion system for producing a cavity or shaped hole in an element to be processed according to the present invention thus conceived can undergo numerous modifications and variations, all included in the same inventive concept.

Furthermore, in practice, the materials used, as also the dimensions and components, can vary according to technical demands.

## Claims

1. An electroerosion system (10) for the production of a cavity (22) or a shaped hole in an element (20) to be processed, said system (10) comprising a tank (12) containing a dielectric fluid (14) and an electrode (16) connected to an electric power supply system (18) to supply a high voltage to said electrode (16) and to produce a series of electric discharges on said element (20) which is immersed together with said electrode (16) in said dielectric fluid (14), in order to obtain a surface erosion thereof, forming said cavity (22) or shaped hole, **characterized in that** it comprises ultrasonic vibration means (30) capable of transmitting a series of ultrasonic waves at a varying frequency to said dielectric fluid (14).

2. The system (10) according to claim 1, **characterized in that** it comprises an electrode-holder (17) which supports said electrode (16) and **in that** it comprises an electric generator (18).

3. The system (10) according to claim 2, **characterized in that** said electric generator (18) is connected to said electrode-holder (17).

4. The system (10) according to claim 2, **characterized in that** said electric generator (18) is integrated with said electrode-holder (17).

5. The system (10) according to any of the claims from 1 to 4, **characterized in that** said ultrasonic vibration means (30) comprise a series of transmitters (32) each of which is in contact with said dielectric fluid (14).

6. The system (10) according to claim 5, **characterized in that** each transmitter (32) is a bar in particular having a "C"-shaped section.

7. The system (10) according to claim 5 or 6, **characterized in that** said ultrasonic vibration means (30) comprise at least one ultrasound generator (36) connected to said series of transmitters (32).

8. The system (10) according to any of the claims from 1 to 7, **characterized in that** said varying frequency has an average value ranging from 35 to 45 KHz.

9. The system (10) according to claim 8, **characterized in that** said varying frequency has an average value of about 40 KHz.
